# FASCICULE DE BREVET EUROPEEN

(11) **EP 3 594 863 B1**
(45) Date de publication et mention de la délivrance du brevet: **24.01.2024**
(21) Numéro de dépôt: 19185832.3
(22) Date de dépôt: 11.07.2019
(51) Int. Cl.: G06N 3/049, G06N 3/048, G06N 3/065

(54) **CIRCUIT NEUROMORPHIQUE IMPULSIONNEL IMPLEMENTANT UN NEURONE FORMEL**
NEUROMORPHER IMPULSSCHALTKREIS, DER EIN KÜNSTLICHES NEURON UMFASST
PULSE-BASED NEUROMORPHIC CIRCUIT IMPLEMENTING A FORMAL NEURON

(30) Priorité: 12.07.2018 FR 1856439
(43) Date de publication de la demande: 15.01.2020
(73) Titulaire: Commissariat à l'énergie atomique et aux énergies alternatives, 75015 Paris (FR)
(72) Inventeur: Valentian, Alexandre, 38054 GRENOBLE Cedex 09 (FR); Bichler, Olivier, 38054 GRENOBLE Cedex 09 (FR); Rummens, François, 38054 GRENOBLE Cedex 09 (FR)
(74) Mandataire: Brevalex

(56) Documents cités:
- WO-A1-2015/170041
- US-A1- 2012 169 397
- XINYU WU ET AL: "A CMOS Spiking Neuron for Brain-Inspired Neural Networks With Resistive Synapses and In Situ Learning", IEEE TRANSACTIONS ON CIRCUITS AND SYSTEMS II: EXPRESS BRIEFS, vol. 62, no. 11, 14 juillet 2015 (2015-07-14), pages 1088-1092, XP055570507, US ISSN: 1549-7747, DOI: 10.1109/TCSII.2015.2456372
- CARLOS ZAMARRE?O-RAMOS ET AL: "On Spike-Timing-Dependent-Plasticity, Memristive Devices, and Building a Self-Learning Visual Cortex", FRONTIERS IN NEUROSCIENCE, vol. 5, 17 mars 2011 (2011-03-17), XP055012442, ISSN: 1662-4548, DOI: 10.3389/fnins.2011.00026
- BODO RUECKAUER ET AL: "Conversion of Continuous-Valued Deep Networks to Efficient Event-Driven Networks for Image Classification", FRONTIERS IN NEUROSCIENCE, vol. 11, 7 décembre 2017 (2017-12-07), XP055570440, CH ISSN: 1662-4548, DOI: 10.3389/fnins.2017.00682
- RUECKAUER BODO ET AL: "Conversion of analog to spiking neural networks using sparse temporal coding", 2018 IEEE INTERNATIONAL SYMPOSIUM ON CIRCUITS AND SYSTEMS (ISCAS), IEEE, 27 mai 2018 (2018-05-27), pages 1-5, XP033434741, DOI: 10.1109/ISCAS.2018.8351295

## Description

### DOMAINE TECHNIQUE

Le domaine de l'invention est celui des réseaux de neurones artificiels. L'invention concerne plus particulièrement un circuit neuromorphique du type neurone impulsionnel configuré de manière à fonctionner de manière équivalente à un neurone formel.

### ÉTAT DE LA TECHNIQUE ANTÉRIEURE

Une cellule nerveuse, ou neurone, peut être décomposée en plusieurs parties :
- Les dendrites qui sont les entrées du neurone via lesquelles il reçoit des signaux d'excitation ou d'inhibition ;
- Le corps du neurone qui est le théâtre d'échanges ioniques à travers la membrane cellulaire ;
- L'axone, une longue extension du corps cellulaire, qui est l'unique sortie du neurone.

Selon les signaux d'excitation ou d'inhibition reçus au niveau des dendrites, des ions transitent à travers la membrane cellulaire. Le déséquilibre de charges entre l'intérieur et l'extérieur de la cellule induit une différence de tension de part et d'autre de la membrane. On parle alors de tension de membrane aux bornes d'une capacité de membrane. Lorsque cette tension de membrane dépasse un certain niveau, c'est-à-dire lorsque la cellule est suffisamment excitée, le neurone connaît un échange brutal d'ions. Il en résulte une variation significative de la tension de membrane. Cette variation, appelée potentiel d'action (« action potential » ou encore « spike » en anglais), se propage le long de l'axone, vers les boutons synaptiques, les sorties du neurone. Vus de l'extérieur de la cellule, ces « spikes » constituent l'activité électrique du neurone.

Dans un réseau de neurones biologiques, chaque neurone est connecté à plusieurs milliers d'autres via autant de synapses. Le terme synapse désigne la connexion entre la terminaison axonique d'un neurone dit présynaptique et une dendrite d'un neurone dit postsynaptique. L'influence du neurone présynaptique sur le neurone postsynaptique est pondérée par le poids de la synapse qui peut être excitatrice ou inhibitrice. Dans le premier cas, un « spike » présynaptique charge la tension de membrane du neurone postsynaptique et précipite la génération d'un potentiel d'action postsynaptique. Dans le second cas, un « spike » présynaptique a pour effet de dépolariser la membrane postsynaptique et de retarder l'apparition d'un potentiel d'action postsynaptique.

Les réseaux de neurones artificiels sont utilisés dans différents domaines de traitement du signal (visuel, sonore ou autre) comme par exemple dans le domaine de la classification ou la reconnaissance d'images. Ils sont inspirés des réseaux de neurones biologiques dont ils imitent le fonctionnement et sont essentiellement composés de neurones artificiels interconnectés entre eux par des synapses, qui sont classiquement implémentées par des mémoires numériques, mais qui peuvent être également implémentées par des composants résistifs dont la conductance varie en fonction de la tension appliquée à leurs bornes.

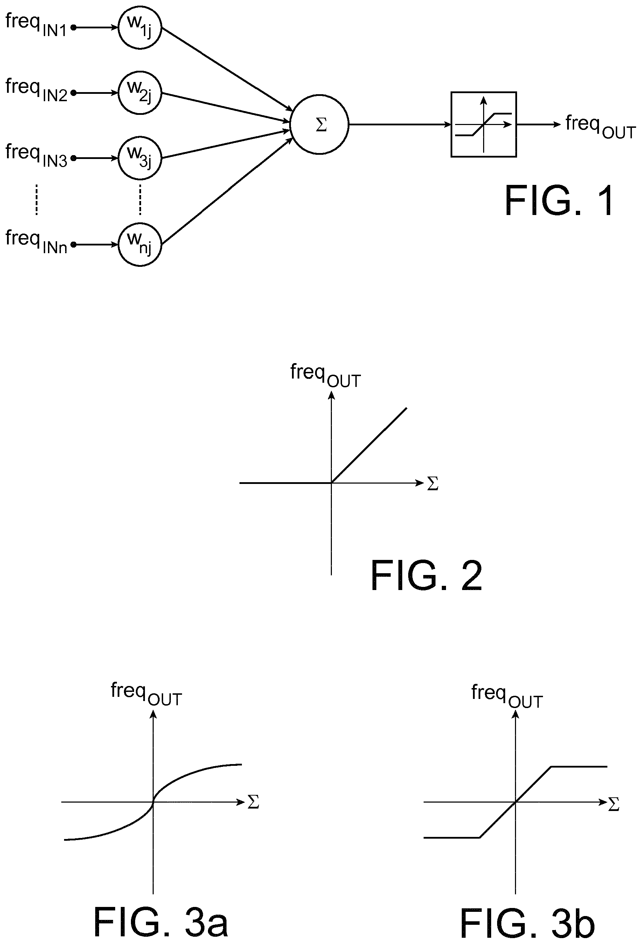

Un premier modèle de neurone artificiel est celui du neurone formel. Selon ce modèle représenté en figure 1, une fréquence d'émission de « spikes » est associée à chaque neurone. Cette fréquence est encodée comme un simple chiffre et constitue la sortie du neurone. Chaque neurone prend donc en entrée et à travers les synapses les fréquences freq_{IN1}, freq_{IN2}, freq_{IN3}, freq_{INn} des neurones présynaptiques qui lui sont connectés. Le calcul consiste alors à multiplier chacune de ces fréquences par le poids synaptique correspondant w₁ⱼ, w₂ⱼ, w₃ⱼ, wₙⱼ puis de cumuler tous ces produits poids × fréquence. La somme de ces produits est ensuite injectée dans un bloc non-linéaire, appelé fonction d'activation, qui fournit la fréquence du neurone freq_{OUT}.

Deux principaux types de fonctions d'activation sont utilisés pour les neurones formels :
- La ReLU (pour « Rectified Linear Unit » qui désigne une Unité de Rectification Linéaire) qui délivre comme représenté en figure 2 une fréquence freq_{OUT} qui est nulle si la somme Σ des produits poids × fréquence est négative et qui est proportionnelle à la somme Σ lorsque celle-ci est supérieure à zéro. Cette fonction d'activation n'impose à la fréquence aucune limite supérieure ;
- La tangente hyperbolique ou sigmoïde représentée en figure 3a, que l'on retrouve aussi sous forme linéaire par partie comme représentée en figure 3b. Cette fonction d'activation peut aboutir à une fréquence négative. La fréquence de sortie du neurone est bornée selon - freq_{MAX} ≤ freq_{OUT} ≤ freq_{MAX}.

Outre leur simplicité, les neurones formels présentent un important intérêt en matière d'apprentissage supervisé grâce à la méthode de rétro-propagation du gradient. Toutefois, leur implémentation matérielle sur un calculateur présente l'inconvénient d'une consommation excessive et, dans une moindre mesure, d'un encombrement trop important. Leur implémentation dans un système embarqué (mobile multifonction, véhicule autonomes ou objet connecté par exemple) ou en guise d'accélérateur au sein d'un processeur est ainsi compromise.

Un autre modèle de neurone artificiel est celui du neurone impulsionnel (également dénommé neurone à potentiel d'action ou « spiking neuron » en anglais). Le neurone impulsionnel est plus proche du neurone biologique que le neurone formel en ce qu'il génère des potentiels d'action (également dénommés impulsions ou « spikes ») et modélise bien souvent une tension de membrane ainsi qu'un seuil. Le modèle le plus simple de neurone impulsionnel est du type intégratif à seuil (« Integrate and Fire » en anglais) : il intègre ses entrées, compare le résultat de cette intégration à un seuil et émet un potentiel d'action lors du franchissement de ce seuil.

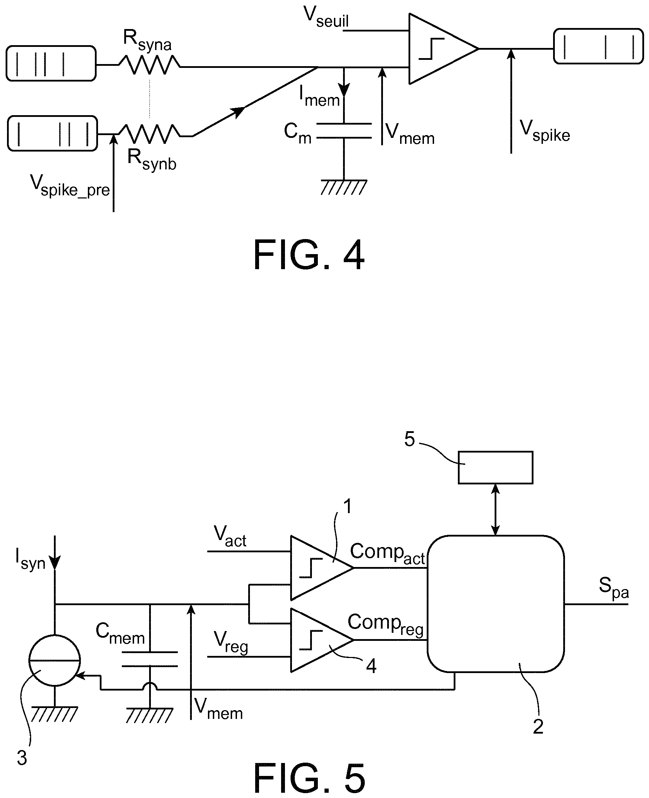

Dans un souci d'économie de consommation et de surface, l'idée d'un réseau de neurones impulsionnels analogiques connectés par des synapses prenant la forme d'éléments résistifs non-volatils de type RRAM (« Resistive Random-Access Memory ») séduit beaucoup de concepteurs. Le principe d'une telle implémentation est représenté sur la figure 4. La contribution V_{spike_pre} d'un neurone présynaptique est pondérée par la valeur de la résistance synaptique correspondante R_{synb} et fournit ainsi un courant d'excitation I_{synb}. Ce courant est injecté dans une capacité Cₘ qui intègre ainsi les différentes stimulations au cours du temps. La tension de membrane, modélisée par la tension Vₘₑₘ aux bornes de la capacité Cₘ, est comparée à un seuil Vₛₑᵤᵢₗ. Lorsque ce dernier est dépassé par la tension de membrane, un spike Vₛₚᵢₖₑ est émis et la capacité est déchargée pour réinitialiser la tension de membrane, typiquement en la remettant à zéro.

On dispose ainsi, d'une part, de neurones formels adaptés pour réaliser l'apprentissage d'un réseau de neurones et, d'autre part, de neurones impulsionnels compacts et peu énergivores. Une stratégie découle de cette situation qui consiste, comme par exemple décrit dans l'article de B. Rueckauer et al., « Conversion of Continuous-Valued Deep Networks to Efficient Event-Driven Networks for Image Classification », Front Neurosci. 2017 Dec 7;11:682, à réaliser l'apprentissage nécessaire au bon fonctionnement du réseau en utilisant des neurones formels, puis d'implémenter le réseau ainsi appris grâce à des neurones impulsionnels. Mais pour mener à bien une telle stratégie, il faut pouvoir disposer d'une implémentation impulsionnelle apte à mettre en oeuvre le modèle formel.

Des contraintes qui pèsent sur la conception d'un neurone impulsionnel analogique pour qu'il puisse fonctionner de manière équivalente à un neurone formel en produisant un train d'impulsions (« spike train ») représentatif de la fréquence de sortie du neurone formel sont les suivantes.

Dans le cas d'une fonction d'activation du type sigmoïde, pour imiter la limitation en fréquence, il faut instaurer une période dite réfractaire qui correspond au temps minimal qui sépare la génération de deux potentiels d'action successifs par le neurone impulsionnel. La durée de cette période réfractaire correspond à l'inverse de la fréquence maximale imposée par le modèle formel.

D'autres éléments nécessaires à l'équivalence concernent les plateaux de fréquence constante visibles sur les figures 2 et 3b (qui correspondent à la période réfractaire dans le cas d'une fonction d'activation sigmoïde et au plateau de fréquence nulle pour la fonction d'activation ReLU). Dans le cas de la sigmoïde, l'équivalence exige de poursuivre l'intégration des stimulations d'entrée arrivant pendant la période réfractaire pour, le cas échéant, émettre un nouveau potentiel d'action à l'expiration de la période réfractaire. Pour la ReLU, il faut que l'intégration négative puisse atteindre une valeur absolue importante. Dans les deux cas, il s'avère nécessaire de continuer à intégrer les stimulations d'entrée sans pouvoir émettre de potentiel d'action, et donc sans pouvoir réduire la tension de membrane via une décharge de la capacité de membrane.

Une telle poursuite de l'intégration ne peut cependant être réalisée en analogique de manière satisfaisante.

Dans le cas d'une sigmoïde, la durée de la période réfractaire peut être telle que les stimulations arrivant en entrée du neurone au cours de cette période correspondent à plusieurs potentiels d'action. Prenant l'exemple d'un réseau où les synapses peuvent prendre des poids entiers allant de -4 à +4 et le neurone analogique est conçu pour qu'une excitation de poids de valeur absolue 4 génère un potentiel d'action, la tension de membrane est susceptible d'atteindre les niveaux +20, +30 ou plus encore au cours de la période réfractaire. La gamme de tension des technologies récentes étant de l'ordre du Volt, il faut donc prévoir des quanta de tension de membrane de l'ordre de quelques dizaines de mV. Et plus ce quantum est faible, plus le neurone est sensible aux erreurs de désaccord, de non-linéarité et de bruit. Assurer en analogique la poursuite de l'intégration lors de la période réfractaire vient donc dégrader fortement le fonctionnement général du neurone.

Pour une fonction d'activation ReLU, cette solution analogique est encore moins envisageable, l'excursion de la somme Z dans le négatif pouvant être très importante.

Ainsi, en pratique, la poursuite de l'intégration dans les cas où il ne peut y avoir génération de potentiel d'action risque de conduire à une saturation analogique de la tension de membrane.

XINYU WU ET AL, "A CMOS Spiking Neuron for Brain-Inspired Neural Networks With Resistive Synapses and In Situ Learning", IEEE TRANSACTIONS ON CIRCUITS AND SYSTEMS Il: EXPRESS BRIEFS, US, (20150714), vol. 62, no. 11, décrit une architecture de neurone impulsionnel apte à réaliser un apprentissage de type STPD (« Spike-Timing Dependant Plasticity » désignant une une plasticité fonction du temps d'occurence des impulsions).

US 2012/169397 A1 décrit un intégrateur qui vise à passer outre les inconvénients d'un intégrateur purement analogique, notamment une excursion d'intégration limitée. Cet intégrateur réalise une inversion de polarité du signal d'entrée lorsqu'un signal d'intégration analogique dépasse des seuils et exploite un compteur numérique pour réaliser un comptage du nombre de dépassements des seuils. Ce comptage sert alors de représentation numérique du résultat d'intégration.

### EXPOSÉ DE L'INVENTION

L'invention a pour objectif de permettre la mise en oeuvre de la stratégie sus-citée au moyen d'un circuit neuromorphique du type neurone impulsionnel qui fonctionne de manière équivalente à un neurone formel. L'invention vise plus particulièrement à répondre à la problématique de la saturation analogique de la tension de membrane.

L'invention propose pour ce faire un circuit neuromorphique du type neurone tel que défini par les revendications annexées.

L'invention s'étend à un réseau de neurones artificiels, comprenant une pluralité de circuits neuromorphiques selon l'invention.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels, outre les figues 1 à 4 déjà discutées précédemment
- la figure 5 est un schéma d'une réalisation possible d'un circuit neuromorphique impulsionnel selon l'invention
- la figure 6 représente une implémentation possible d'un neurone impulsionnel reproduisant le comportement d'une fonction d'activation sigmoïde et la figure 7 représente une machine d'états suivis par le régulateur du neurone de la figure 6 ;
- la figure 8 représente une implémentation possible d'un neurone impulsionnel reproduisant le comportement d'une fonction d'activation ReLU et la figure 9 représente une machine d'états suivis par le régulateur du neurone de la figure 8.

### EXPOSÉ DÉTAILLÉ DE MODES DE RÉALISATION PARTICULIERS

L'invention porte sur un circuit neuromorphique du type neurone impulsionnel, configuré de manière à pouvoir fonctionner de manière équivalente à un neurone formel.

En référence à la figure 5, ce circuit comprend une entrée de réception d'un courant synaptique I_{syn} correspondant au cumul des contributions de chaque neurone présynaptique, chacune de ces contributions étant pondérée par la valeur de la résistance synaptique correspondante. Ce courant I_{syn} est injecté dans une capacité de membrane Cₘ aux bornes de laquelle s'établit la tension de membrane Vₘ. La tension de membrane Vₘ est comparée à au moins une tension d'action V_{act} au moyen d'un comparateur d'action 1 qui fournit en tant que résultat de comparaison un signal comp_{act}. Un régulateur 2 exploite le signal comp_{act} pour, en cas de dépassement de l'au moins une tension d'action par la tension de membrane, générer un potentiel d'action Sₚₐ et piloter un dispositif de réinitialisation de la tension de membrane, par exemple un injecteur de courant 3 relié à l'entrée de réception du courant synaptique, afin de modifier la charge de la capacité de membrane. Cette modification de la charge peut correspondre à une charge ou décharge complète de la capacité de membrane (on parle alors de remise à zéro absolue de la tension de membrane) ou à une charge ou décharge partielle (on parle alors de remise à zéro relative de la tension de membrane) de la capacité de membrane par laquelle une quantité de charge prédéterminée est ajoutée ou retranchée à la charge de la capacité de membrane. Prenant l'exemple d'une tension d'action positive, une charge ou décharge partielle peut notamment être réalisée de manière à retrancher à la charge de la capacité de membrane une quantité de charge telle que la tension d'action est soustraite à la tension de membrane.

Le seuillage d'action réalisé par le circuit selon l'invention est adapté à la fonction d'activation choisie. Pour une fonction d'activation de type ReLU qui ne comprend pas de fréquence négative, un unique comparateur d'action est nécessaire. Dans le cas d'une fonction d'activation du type sigmoïde, deux comparateurs d'action sont nécessaires, l'un associé à un seuil haut et l'autre associé à un seuil bas (typiquement le négatif du seuil haut), et le régulateur est configuré de manière à pouvoir générer des potentiels d'action signés, à savoir un potentiel d'action positif en cas de dépassement du seuil haut et un potentiel d'action négatif en cas de dépassement du seuil bas.

Le circuit neuromorphique selon l'invention comprend en outre au moins un comparateur de régulation 4 pour comparer la tension de membrane Vₘₑₘ à une tension de régulation V_{reg} et fournir en tant que résultat de comparaison un signal comp_{reg}, ainsi qu'un registre de dépassements de seuil 5. Le régulateur 2 est configuré pour, en cas de dépassement de la tension de régulation V_{reg} par la tension de membrane Vₘₑₘ alors que le circuit ne doit pas générer de potentiel d'action (soit que sa tension de membrane est négative pour une ReLU, soit que l'on soit dans une période réfractaire pour une sigmoïde), piloter le dispositif de réinitialisation de la tension de membrane 3 afin de modifier, totalement ou partiellement, la charge de la capacité de membrane et modifier le registre de dépassements de seuil 5.

Dans le cas d'une fonction d'activation de type ReLU, le circuit neuromorphique comprend un comparateur d'action 1 associé à un seuil haut (la tension d'action) et un comparateur de régulation 4 associé à un seuil bas (la tension de régulation). Le seuil bas ne sert pas à générer des potentiels d'action mais à détecter quand la tension de membrane Vₘₑₘ est trop basse. Lorsque ce seuil bas est dépassé, la tension Vₘₑₘ est rehaussée au moyen d'une augmentation de la charge de la capacité de membrane (ce qui permet de limiter l'excursion négative de la tension de membrane) et le registre de dépassements de seuil 5 est modifié pour garder trace de ce rehaussement. En d'autres termes, on évite de continuer à intégrer des stimulations négatives qui pourraient faire saturer la tension de membrane, et on stocke dans le registre une information relative au(x) rehaussement(s) opéré(s) sur la tension de membrane.

Le régulateur 2 est en outre configuré pour, en cas de dépassement de la tension d'action V_{act} par la tension de membrane Vₐₘ, piloter le dispositif de réinitialisation de la tension de membrane afin de décharger la capacité de membrane et interroger le registre de dépassements de seuil pour décider de générer ou non un potentiel d'action Sₚₐ. Notamment, un potentiel d'action n'est pas généré si le registre garde trace d'un ou plusieurs rehaussements de la tension de membrane. La décharge de la capacité de membrane est une décharge totale ou partielle, cette dernière étant réalisée en retranchant une quantité de charge prédéterminée à la charge de la capacité de membrane, par exemple une quantité de charge telle que la tension d'action est soustraite à la tension de membrane.

Le registre de dépassements de seuil peut être un compteur qui est décrémenté en cas de dépassement de la tension de régulation par la tension de membrane (i.e. lorsque le seuil bas est dépassé). En cas de dépassement de la tension d'action par la tension de membrane, le régulateur décide de générer un potentiel d'action Sₚₐ lorsque le compteur indique une valeur nulle, cette dernière n'étant alors pas modifiée, et de ne pas générer un potentiel d'action lorsque le compteur indique une valeur négative, cette valeur étant alors incrémentée.

Prenant maintenant l'exemple d'une fonction d'activation de type sigmoïde, le circuit neuromorphique nécessite deux comparateurs de régulation, l'un associé à un seuil bas pour comparer la tension de membrane à une première tension de régulation, l'autre associé à un seuil haut pour comparer la tension de membrane à une deuxième tension de régulation. Ces comparateurs de régulation vont permettre d'éviter une possible saturation de la tension de membrane au cours des périodes réfractaires. Ainsi, pendant une fenêtre temporelle suivant la génération d'un potentiel d'action sur une sortie du circuit neuromorphique (période réfractaire), en cas de dépassement de la première ou de la deuxième tension de régulation par la tension de membrane Vₘₑₘ, le régulateur vient piloter le dispositif de réinitialisation de la tension de membrane 3 afin de réduire ou d'augmenter la charge de la capacité de membrane et modifier le registre de dépassements de seuil 5. En d'autres termes, on évite de continuer à intégrer des stimulations positives ou négatives qui pourraient faire saturer la tension de membrane pendant une période réfractaire, et on stocke dans le registre une information relative à la ou les réalisations d'une adaptation de la tension de membrane.

Le registre de dépassements de seuil peut être un compteur qui est incrémenté en cas de dépassement de la deuxième tension de régulation par la tension de membrane au cours d'une période réfractaire et qui est décrémenté en cas de dépassement de la première tension de régulation par la tension de membrane au cours d'une période réfractaire.

On a vu précédemment qu'avec une fonction d'activation sigmoïde, le circuit neuromorphique doit pouvoir générer des potentiels d'action signés, et peut pour cela nécessiter deux comparateurs d'action, un premier associé à un seuil haut (première tension d'action) et un deuxième associé à un seuil bas (deuxième tension d'action). Dans un mode de réalisation avantageux, le circuit ne comporte en réalité que deux comparateurs, chacun étant en charge d'une double fonction d'action (pour la génération d'un potentiel d'action hors période réfractaire) et de régulation (pour la détection d'une possible saturation de la tension de membrane en période réfractaire). Dans ce mode de réalisation, le premier comparateur d'action et le deuxième comparateur de régulation forment ainsi un même comparateur à un seuil haut 1 et le deuxième comparateur d'action et le premier comparateur de régulation forment ainsi un même comparateur à un seuil bas 4.

Le régulateur est en outre configuré pour :
- si le compteur indique une valeur positive à l'expiration d'une période réfractaire, générer un potentiel d'action d'un premier type (potentiel d'action positif par exemple) et décrémenter le compteur ;
- si le compteur indique une valeur négative à l'expiration d'une période réfractaire, générer un potentiel d'action d'un deuxième type (potentiel d'action négatif par exemple) et incrémenter le compteur.

Et, en dehors des périodes réfractaires, le régulateur est configuré pour générer un potentiel d'action du premier type en cas de dépassement de la première tension d'action par la tension de membrane et un potentiel d'action du deuxième type sur la sortie du circuit neuromorphique en cas de dépassement de la deuxième tension d'action par la tension de membrane.

Le régulateur est ainsi configuré pour pouvoir fonctionner selon deux modes : période réfractaire et fonctionnement normal. Pendant une période réfractaire, le compteur est incrémenté ou décrémenté selon le franchissement des seuils de régulation, la réinitialisation de la tension de membrane est effective bien qu'aucun potentiel d'action ne soit généré. En fonctionnement normal, le compteur est dépilé si besoin (un potentiel positif ou négatif est généré si le compteur est positif ou négatif), les potentiels d'action sont générés de manière habituelle et accompagnés d'une modification de la charge de la capacité de membrane pour réinitialiser totalement ou partiellement la tension de membrane. Une période réfractaire débute après la génération de chaque potentiel d'action et s'achève à l'expiration d'un minuteur.

On notera que l'implémentation d'un neurone correspondant à une fonction d'activation ReLU ou à une fonction d'activation sigmoïde exploite la même base matérielle : deux comparateurs, un régulateur, un dispositif de réinitialisation de la tension de membrane et un registre de dépassements de seuil. Il est ainsi possible d'élaborer un neurone « deux en un » qui peut, au choix, reproduire le comportement d'une fonction d'activation ReLU ou sigmoïde.

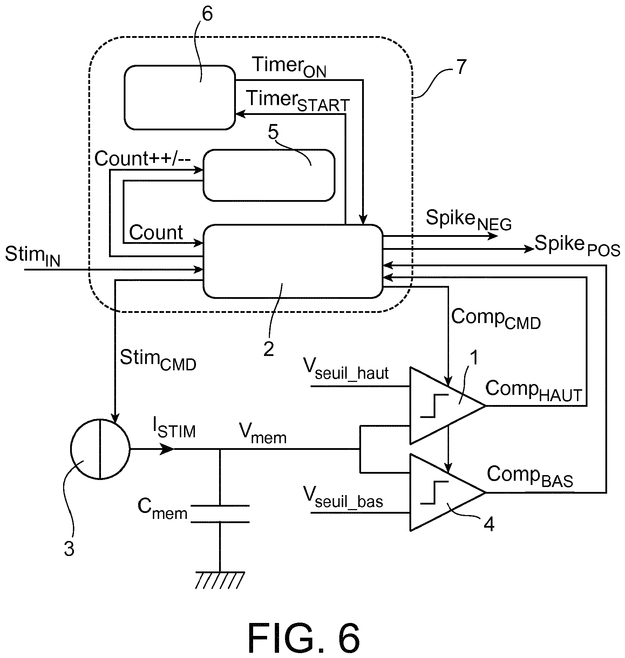

Une implémentation possible d'un neurone impulsionnel reproduisant le comportement d'une fonction d'activation sigmoïde est représentée sur la figure 6. Sur cette figure, les éléments communs avec la figure 5 portent les même références à l'exception des seuils qui sont ici notés V_{seuil_haut} et V_{seuil_bas} et des sorties des comparateurs qui sont ici notées Compₕₐᵤₜ et Comp_{bas}. Un courant référencé I_{STIM} est injecté dans la capacité de membrane Cₘₑₘ. Ce courant est fourni par un dispositif de réinitialisation de la tension de membrane qui prend ici la forme d'un injecteur de courant 3 piloté au moyen d'un signal de commande numérique stim_{CMD} émis par le régulateur 2. Le régulateur 2, le compteur 5 et un minuteur 6 forment un bloc numérique 7 du circuit neuromorphique.

On peut prendre à titre d'exemple les caractéristiques suivantes :
- Nombre de niveaux de la tension de membrane : 14 (de -7 à +7),
- Seuil haut=+4 et seuil bas=-4,
- Charge/Décharge partielle de la capacité de membrane pour réaliser une remise-à-zéro relative consistant à ajouter/soustraire à la charge de la capacité de membrane une quantité de charge prédéterminée telle qu'une tension équivalente au seuil dépassé est ajoutée/soustraite à la tension de membrane;
- Écart entre deux niveaux de tension : 64 mV,
- Courant à injecter pour faire passer la tension de membrane d'un niveau de tension à un autre (+1): 160 nA,
- Taille du compteur : 3 bits + 1 bit de signe.

Le régulateur 2 prend pour entrées une commande d'excitation Stim_{IN} représentative de l'activité des neurones présynaptiques, les sorties des comparateurs Compₕₐᵤₜ et Comp_{ba}, une information sur l'activité du minuteur Timer_{ON} (période réfractaire en cours) et une information Count sur la valeur du compteur. Il a pour sorties le signal de commande stim_{CMD} de l'injecteur de courant 3, une commande d'incrémentation Count++ ou de décrémentation Count-- du compteur, un commande Timer_{START} de lancement du minuteur, une commande de comparaison Comp_{CMD}, un potentiel d'action positif Spike_{POS} et un potentiel d'action négatif Spike_{NEG}.

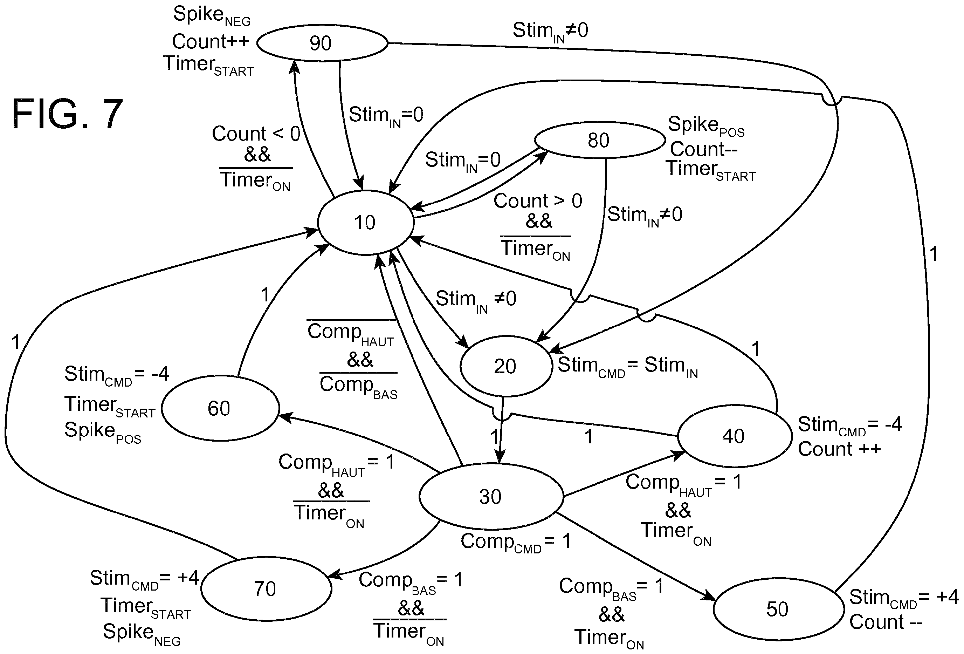

Le régulateur est configuré pour mettre en oeuvre la machine d'état représentée sur la figure 7. Partant d'un état d'attente 10, en présence d'une stimulation en entrée (Stim_{IN}≠0), il passe dans un état 20 où il recopie l'entrée Stim_{IN} sur sa sortie Stim_{CMD} puis dans un état 30 de comparaison aux seuils où il émet la commande de comparaison Comp_{CMD}.

Lorsque le minuteur est en activité (Timer_{ON} indiquant une période réfractaire) et que le seuil haut est dépassé (Compₕₐᵤₜ=1), il passe dans un état 40 de décharge de la capacité de membrane (via la commande Stim_{CMD}=-4) et de stockage d'un potentiel d'action positif (via l'incrémentation Count++ du compteur 5).

Lorsque le minuteur est en activité (Timer_{ON} indiquant une période réfractaire) et que le seuil bas est dépassé (Comp_{bas}=1), il passe dans un état 50 de charge de la capacité de membrane (via la commande Stim_{CMD}=+4) et de stockage d'un potentiel d'action négatif (via la décrémentation Count-- du compteur 5).

Lorsque le minuteur n'est pas en activité (TimerON, en dehors d'une période réfractaire) et que le seuil haut est dépassé (Compₕₐᵤₜ=1), il passe dans un état 60 de génération d'une potentiel d'action positif Spike_{POS}, de décharge de la capacité de membrane (via la commande Stim_{CMD}=-4) et de lancement du minuteur (via la commande Timer_{START}.

Lorsque le minuteur n'est pas en activité (T̅i̅m̅e̅r̅O̅N̅, en dehors d'une période réfractaire) et que le seuil bas est dépassé (Comp_{bas}=1), il passe dans un état 70 de génération d'une potentiel d'action négatif Spike_{NEG}, de charge de la capacité de membrane (via la commande Stim_{CMD}=+4) et de lancement du minuteur (via la commande Timer_{START}.

Le régulateur passe de chacun des états 40, 50, 60 et 70 à l'état d'attente 10. Cet état d'attente 10 est quitté à l'expiration d'une période réfractaire (TimerON) pour atteindre un état 80 ou 90 selon que le compteur affiche une valeur positive ou négative. Si le compteur affiche une valeur positive, un potentiel d'action positif Spike_{POS} est généré, le compteur est décrémenté et le minuteur est lancé via la commande Timer_{START}. En revanche, si le compteur affiche une valeur négative, un potentiel d'action négatif Spike_{NEG} est généré, le compteur est incrémenté et le minuteur est lancé via la commande Timer_{START}. Puis, en l'absence de stimulation d'entrée (Stim_{IN}=0), il repasse dans l'état d'attente 10 tandis qu'il repasse dans l'état 20 de recopie de l'entrée Stim_{IN} sur sa sortie Stim_{CMD} en présence de stimulation d'entrée (Stim_{IN}≠0).

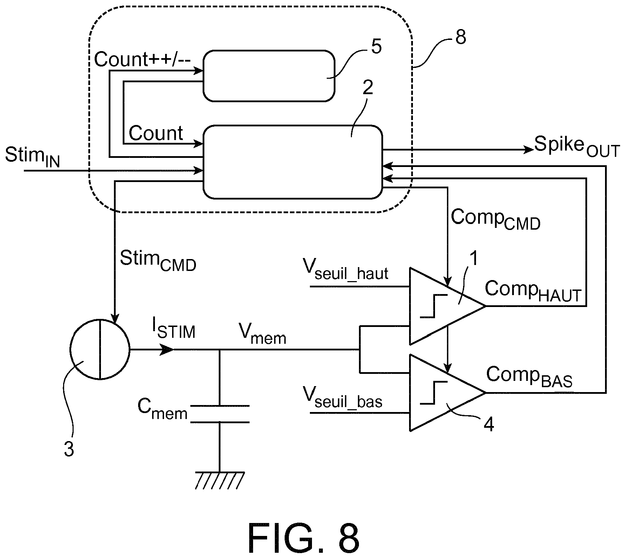

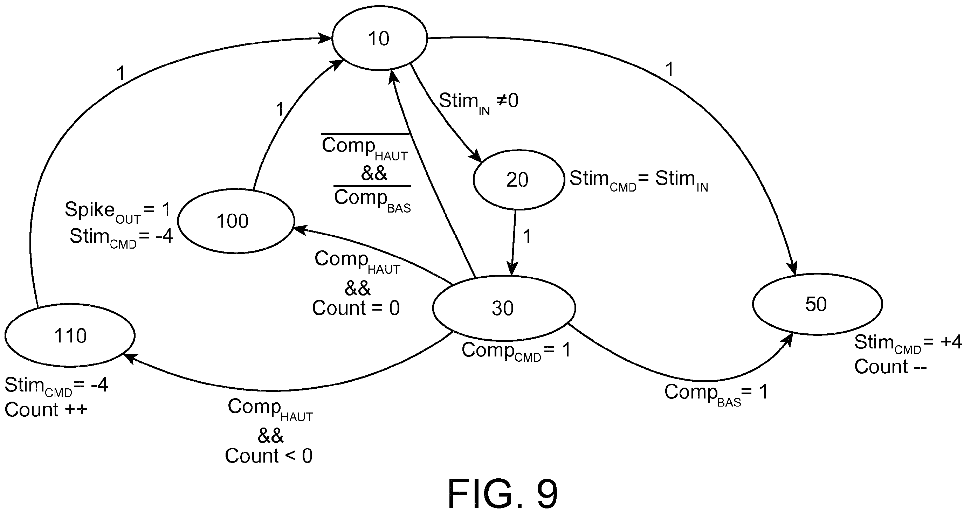

On a représenté sur la figure 8 une implémentation possible d'un neurone impulsionnel reproduisant le comportement d'une fonction d'activation ReLU. Cette implémentation est similaire à celle du neurone des figures 6 et 7, mais son bloc numérique 8 est simplifié : il n'y a pas de minuteur et le régulateur 2 est configuré pour mettre en oeuvre la machine d'état représentée sur la figure 9 ne générant qu'un type de potentiel d'action Spike_{OUT}.

Sur cette figure 9, les états 10, 20, 30 et 50 sont identiques à ceux portant les mêmes références sur la figure 7. Partant de l'état 30 de comparaison aux seuils, si le seuil bas est dépassé (Comp_{bas}=1), la machine passe dans l'état 50 de charge de la capacité de membrane (via la commande Stim_{CMD}=+4) et de stockage d'une information relative à l'occurrence d'une telle charge (via la décrémentation Count-- du compteur 5).

Partant de l'état 30 de comparaison aux seuils, si le seuil haut est dépassé (Compₕₐᵤₜ=1) et que le compteur affiche une valeur nulle, la machine passe dans un état 100 de génération d'un potentiel d'action Spike_{OUT} et de décharge de la capacité de membrane (via la commande Stim_{CMD}=-4).

Partant de l'état 30 de comparaison aux seuils, si le seuil haut est dépassé (Compₕₐᵤₜ=1) et que le compteur affiche une valeur négative, la machine passe dans un état 110 de décharge de la capacité de membrane (via la commande Stim_{CMD}=-4) et d'incrémentation Count++ du compteur.

L'invention n'est pas limitée au circuit neuromorphique précédemment décrit mais s'étend également à un réseau de neurones artificiels comprenant une pluralité de tels circuits neuromorphiques, par exemple connectés entre eux via des synapses résistives de type RRAM.

Un procédé de commande d'un neurone impulsionnel pour le rendre équivalent à un neurone formel, qui n'est pas revendiqué, comprend lorsque le neurone impulsionnel ne doit pas générer de potentiel d'action, et suite au dépassement d'une tension de régulation par la tension de membrane, les étapes consistant à piloter l'injecteur de courant afin de modifier la charge de la capacité de membrane et à modifier un registre de dépassements de seuil. Lorsque le neurone impulsionnel est en mesure de générer un potentiel d'action, ce registre est interrogé pour décider de générer ou non un tel potentiel d'action sur une sortie du circuit neuromorphique.

## Revendications

1. Circuit neuromorphique du type neurone impulsionnel destiné à implémenter un neurone formel possédant une fonction d'activation, ledit circuit neuromorphique comprenant une capacité de membrane (Cₘₑₘ) aux bornes de laquelle s'établit une tension de membrane (Vₘₑₘ), un premier comparateur d'action (1) configuré pour comparer la tension de membrane à une première tension d'action (V_{act}, V_{seuil_haut}) et un dispositif de réinitialisation de la tension de membrane (3), ledit circuit neuromorphique étant **caractérisé en ce qu'**il comporte un premier comparateur de régulation (4) pour comparer la tension de membrane à une première tension de régulation (V_{reg}, V_{seuil_bas}), un registre de dépassements de seuil (5) et un régulateur (2), ledit régulateur étant configuré :
- en cas de dépassement de la première tension de régulation (V_{reg}, V_{seuil_bas}) par la tension de membrane, pour piloter le dispositif de réinitialisation de la tension de membrane (3) de manière à modifier la charge de la capacité de membrane d'une quantité de charge prédéterminée, et pour modifier corrélativement le registre de dépassements de seuil (5) ; et
- en cas de dépassement de la première tension d'action (V_{act}, V_{seuil_haut}) par la tension de membrane, pour piloter le dispositif de réinitialisation de la tension de membrane (3) de manière à modifier la charge de la capacité de membrane d'une quantité de charge prédéterminée, et pour interroger le registre de dépassements de seuil pour décider de générer ou non un potentiel d'action (Sₚₐ, Spike_{NEG}, Spike_{POS}, Spike_{OUT}) sur une sortie du circuit neuromorphique.

2. Circuit neuromorphique selon la revendication 1, **caractérisé en ce que** ladite fonction d'activation est de type ReLU, et que le registre de dépassements de seuil (5) est un compteur qui est décrémenté en cas de dépassement de la première tension de régulation (V_{reg}) par la tension de membrane et qui, alors qu'il indique une valeur négative, est incrémenté en cas de dépassement de la première tension d'action (V_{act}) par la tension de membrane.

3. Circuit neuromorphique selon la revendication 2, **caractérisé en ce qu'**en cas de dépassement de la première tension d'action (V_{act}) par la tension de membrane, le régulateur décide de générer un potentiel d'action (Sₚₐ) lorsque le compteur indique une valeur nulle, cette dernière n'étant alors pas modifiée.

4. Circuit neuromorphique selon la revendication 1, **caractérisé en ce que** ladite fonction d'activation est de type sigmoïde et que ledit circuit neuromorphique comprend un deuxième comparateur de régulation configuré pour comparer la tension de membrane à une deuxième tension de régulation (V_{seuil_haut}) et un deuxième comparateur d'action configuré pour comparer la tension de membrane à une deuxième tension d'action, le régulateur étant en outre configuré :
- en cas de dépassement de la deuxième tension de régulation par la tension de membrane, pour piloter le dispositif de réinitialisation de la tension de membrane (3) et modifier le registre de dépassements de seuil (5) ; et
- en cas de dépassement de la deuxième tension d'action par la tension de membrane, pour piloter le dispositif de réinitialisation de la tension de membrane (3) et interroger le registre de dépassements de seuil pour décider de générer ou non un potentiel d'action (Spike_{NEG}, Spike_{POS}) sur une sortie du circuit neuromorphique.

5. Circuit neuromorphique selon la revendication 4, **caractérisé en ce que** le régulateur est configuré pour piloter le dispositif de réinitialisation de la tension de membrane et modifier le registre de dépassements de seuil en cas de dépassement de la première ou de la deuxième tension de régulation par la tension de membrane uniquement pendant une fenêtre temporelle suivant l'émission d'un potentiel d'action sur une sortie du circuit neuromorphique, le potentiel d'action étant d'un premier type ou d'un deuxième type.

6. Circuit neuromorphique selon la revendication 5, **caractérisé en ce que** le régulateur est en outre configuré pour décider de générer ou non un potentiel d'action du premier type ou du deuxième type (Spike_{POS}, Spike_{NEG}) sur une sortie du circuit neuromorphique à l'expiration de ladite fenêtre temporelle.

7. Circuit neuromorphique selon l'une des revendications 5 et 6, **caractérisé en ce que** le registre de dépassements de seuil est un compteur et dans lequel le régulateur est configuré, pendant ladite fenêtre temporelle, pour incrémenter le compteur en cas de dépassement de la deuxième tension de régulation par la tension de membrane et décrémenter le compteur en cas de dépassement de la première tension de régulation par la tension de membrane.

8. Circuit neuromorphique selon la revendication 7, **caractérisé en ce que** le régulateur est configuré pour, à l'expiration de ladite fenêtre temporelle, générer un potentiel d'action du premier type (Spike_{POS}) et décrémenter le compteur si le compteur indique une valeur positive et pour générer un potentiel d'action du deuxième type (Spike_{NEG}) et incrémenter le compteur si le compteur indique une valeur négative.

9. Circuit neuromorphique selon l'une des revendications 5 à 8, **caractérisé en ce que** le régulateur est configuré pour générer un potentiel d'action du premier type (Spike_{POS}), respectivement du deuxième type (Spike_{NEG}), sur la sortie du circuit neuromorphique en cas de dépassement, en dehors de ladite fenêtre temporelle, de la première tension d'action, respectivement de la deuxième tension d'action, par la tension de membrane.

10. Circuit neuromorphique selon l'une des revendications 4 à 9, **caractérisé en ce qu'**il utilise un même comparateur à un seuil haut (1) pour constituer le premier comparateur d'action et le deuxième comparateur de régulation et un même comparateur à un seuil bas (4) pour constituer le deuxième comparateur d'action et le premier comparateur de régulation.

11. Dispositif implémentant un réseau de neurones artificiels, comprenant une pluralité de circuits neuromorphiques selon l'une des revendications 1 à 10.

## Patentansprüche

1. Neuromorphe Schaltung vom Typ Impulsneuron zur Implementierung eines künstlichen Neurons mit einer Aktivierungsfunktion, wobei die neuromorphe Schaltung eine Membrankapazität (Cₘₑₘ), über die sich eine Membranspannung (Vₘₑₘ) einstellt, einen ersten Aktionskomparator (1), der so konfiguriert ist, dass er die Membranspannung mit einer ersten Aktionsspannung (V_{act}, V_{hohe_schwelle}) und eine Vorrichtung zum Zurücksetzen der Membranspannung (3) umfasst, wobei die neuromorphe Schaltung **dadurch gekennzeichnet ist, dass** sie einen ersten Steuerkomparator (4) zum Vergleichen der Membranspannung mit einer ersten Steuerspannung (V_{reg}, V_{niedrige_schwelle}), ein Schwellenüberlaufregister (5) und eine Steuerung (2) umfasst, wobei die Steuerung konfiguriert ist:
- bei Überschreitung der ersten Steuerspannung (V_{reg}, V_{niedrige_schwelle}) durch die Membranspannung, um die Vorrichtung zum Zurücksetzen der Membranspannung (3) so anzusteuern, dass die Ladung der Membrankapazität um einen vorbestimmten Ladungsbetrag geändert wird, und um das Schwellenüberlaufregister (5) entsprechend zu ändern; und
- bei Überschreitung der ersten Aktionsspannung (V_{act}, V_{hohe_schwelle}) durch die Membranspannung, um die Vorrichtung zum Zurücksetzen der Membranspannung (3) so anzusteuern, dass die Ladung der Membrankapazität um einen vorbestimmten Ladungsbetrag geändert wird, und das Schwellenüberlaufregister abzufragen, um zu entscheiden, ob ein Aktionspotenzial (Sₚₐ, Spike_{NEG}, Spike_{POS}, Spike_{OUT}) an einem Ausgang der neuromorphen Schaltung erzeugt werden soll oder nicht.

2. Neuromorphe Schaltung nach Anspruch 1, **dadurch gekennzeichnet, dass** die Aktivierungsfunktion vom Typ ReLU ist, und dass das Schwellenüberlaufregister (5) ein Zähler ist, der bei Überschreitung der ersten Steuerspannung (V_{reg}) durch die Membranspannung heruntergesetzt wird, und der, während er einen negativen Wert anzeigt, bei Überschreitung der ersten Aktionsspannung (V_{act}) durch die Membranspannung hochgesetzt wird.

3. Neuromorphe Schaltung nach Anspruch 2, **dadurch gekennzeichnet, dass** im Falle einer Überschreitung der ersten Aktionsspannung (V_{act}) durch die Membranspannung die Steuerung entscheidet, ein Aktionspotential (Sₚₐ) zu erzeugen, wenn der Zähler einen Wert von Null anzeigt, wobei dieser dann nicht verändert wird.

4. Neuromorphe Schaltung nach Anspruch 1, **dadurch gekennzeichnet, dass** die genannte Aktivierungsfunktion vom Sigmoid-Typ ist und dass die neuromorphe Schaltung einen zweiten Steuerkomparator, der so konfiguriert ist, dass er die Membranspannung mit einer zweiten Steuerspannung (V_{hohe_schwelle}) vergleicht, und einen zweiten Aktionskomparator umfasst, der so konfiguriert ist, dass er die Membranspannung mit einer zweiten Aktionsspannung vergleicht, wobei die Steuerung ferner so konfiguriert ist:
- bei der Überschreitung der zweiten Steuerspannung durch die Membranspannung, um die Vorrichtung zum Zurücksetzen der Membranspannung (3) anzusteuern und das Schwellenüberlaufregister (5) zu ändern; und
- bei der Überschreitung der zweiten Aktionsspannung durch die Membranspannung, um die Vorrichtung zum Zurücksetzen der Membranspannung (3) anzusteuern und das Schwellenüberlaufregister abzufragen, um zu entscheiden, ob an einem Ausgang der neuromorphen Schaltung ein Aktionspotenzial (Spike_{NEG}, Spike_{POS}) erzeugt werden soll oder nicht.

5. Neuromorphe Schaltung nach Anspruch 4, **dadurch gekennzeichnet, dass** die Steuerung so konfiguriert ist, dass sie die Vorrichtung zum Zurücksetzen der Membranspannung ansteuert und das Schwellenüberlaufregister ändert, wenn die Membranspannung die erste oder die zweite Steuerspannung nur während eines Zeitfensters nach dem Aussenden eines Aktionspotentials an einem Ausgang der neuromorphen Schaltung überschreitet, wobei das Aktionspotential von einem ersten Typ oder von einem zweiten Typ ist.

6. Neuromorphe Schaltung nach Anspruch 5, **dadurch gekennzeichnet, dass** die Steuerung ferner so konfiguriert ist, dass sie bei Ablauf des Zeitfensters entscheidet, ob an einem Ausgang der neuromorphen Schaltung ein Aktionspotential des ersten Typs oder des zweiten Typs (Spike_{POS}, Spike_{NEG}) erzeugt wird oder nicht.

7. Neuromorphe Schaltung nach einem der Ansprüche 5 oder 6, **dadurch gekennzeichnet, dass** das Schwellenüberlaufregister ein Zähler ist und wobei die Steuerung während des Zeitfensters so konfiguriert ist, dass sie bei Überschreitung der zweiten Steuerspannung durch die Membranspannung den Zähler hochsetzt und bei Überschreitung der ersten Steuerspannung durch die Membranspannung den Zähler heruntersetzt.

8. Neuromorphe Schaltung nach Anspruch 7, **dadurch gekennzeichnet, dass** die Steuerung so konfiguriert ist, dass sie bei Ablauf des Zeitfensters ein Aktionspotential des ersten Typs (Spike_{POS}) erzeugt und den Zähler heruntersetzt, wenn der Zähler einen positiven Wert anzeigt, und um ein Aktionspotential des zweiten Typs (Spike_{NEG}) zu erzeugen und den Zähler hochzusetzen, wenn der Zähler einen negativen Wert anzeigt.

9. Neuromorphe Schaltung nach einem der Ansprüche 5 bis 8, **dadurch gekennzeichnet, dass** die Steuerung so konfiguriert ist, dass sie ein Aktionspotential des ersten Typs (Spike_{POS}) beziehungsweise des zweiten Typs (Spike_{NEG}) am Ausgang der neuromorphen Schaltung erzeugt, wenn außerhalb des genannten Zeitfensters die erste Aktionsspannung beziehungsweise die zweite Aktionsspannung von der Membranspannung überschritten wird.

10. Neuromorphe Schaltung nach einem der Ansprüche 4 bis 9, **dadurch gekennzeichnet, dass** sie denselben Komparator mit einer hohen Schwelle (1) verwendet, um den ersten Aktionskomparator und den zweiten Steuerkomparator zu bilden, und denselben Komparator mit einer niedrigen Schwelle (4), um den zweiten Aktionskomparator und den ersten Steuerkomparator zu bilden.

11. Vorrichtung, die ein künstliches neuronales Netz implementiert und eine Vielzahl von neuromorphen Schaltungen nach einem der Ansprüche 1 bis 10 umfasst.

## Claims

1. A neuromorphic circuit of the pulse-based neuron type intended to implement a formal neuron having an activation function, said neuromorphic circuit comprising a membrane capacitor (Cₘₑₘ) at the terminals of which a membrane voltage (Vₘₑₘ) is established, a first action comparator (1) configured to compare the membrane voltage to a first action voltage (V_{act}, V_{high-threshold}) and a device for resetting the membrane voltage (3), said neuromorphic circuit being **characterised in that** that it includes a first regulation comparator (4) to compare the membrane voltage to a first regulation voltage (V_{reg}, V_{low-threshold}), a threshold exceedance register (5) and a regulator (2), said regulator being configured:
- in the case of the first regulation voltage (V_{reg}, V_{low-threshold}) being exceeded by the membrane voltage, to drive the device for resetting the membrane voltage (3) so as to change the charge of the membrane capacitor by a predetermined amount of charge, and to correlatively change the threshold exceedance register (5); and
- in the case of the first action voltage (V_{act}, V_{high-threshold}) being exceeded by the membrane voltage, to drive the device for resetting the membrane voltage (3) so as to change the charge of the membrane capacitor by a predetermined amount of charge, and to query the threshold exceedance register to decide whether or not to generate an action potential (S_{pa'}, Spike_{NEG'}, Spike_{POS'}, Spike_{OUT}) on an output of the neuromorphic circuit.

2. The neuromorphic circuit according to claim 1, **characterised in that** said activation function is of the ReLU type, and that the threshold exceedance register (5) is a counter which is decremented in the case of the first regulation voltage (V_{reg}) being exceeded by the membrane voltage and which, while it indicates a negative value, is incremented in the case of the first action voltage (V_{act}) being exceeded by the membrane voltage.

3. The neuromorphic circuit according to claim 2, **characterised in that** in the case of the first action voltage (V_{act}) being exceeded by the membrane voltage, the regulator decides to generate an action potential (Sₚₐ) when the counter indicates a zero value, the latter then not being changed.

4. The neuromorphic circuit according to claim 1, **characterised in that** said activation function is of the sigmoid type and that said neuromorphic circuit comprises a second regulation comparator configured to compare the membrane voltage to a second regulation voltage (V_{high-threshold}) and a second action comparator configured to compare the membrane voltage to a second action voltage, the regulator being further configured:
- in the case of the second regulation voltage being exceeded by the membrane voltage, to drive the device for resetting the membrane voltage (3) and change the threshold exceedance register (5); and
- in the case of the second action voltage being exceeded by the membrane voltage, to drive the device for resetting the membrane voltage (3) and query the threshold exceedance register to decide whether or not to generate an action potential (Spike_{NEG}, Spike_{POS}) on an output of the neuromorphic circuit.

5. The neuromorphic circuit according to claim 4, **characterised in that** the regulator is configured to drive the device for resetting the membrane voltage and change the threshold exceedance register in the case of the first or second regulation voltage being exceeded by the membrane voltage only during a time window following the emission of an action potential on an output of the neuromorphic circuit, the action potential being of a first type or of a second type.

6. The neuromorphic circuit according to claim 5, **characterised in that** the regulator is further configured to decide whether or not to generate an action potential of the first type or of the second type (Spike_{POS}, Spike_{NEG}) on an output of the neuromorphic circuit at the expiration of said time window.

7. The neuromorphic circuit according to one of claims 5 and 6, **characterised in that** the threshold exceedance register is a counter and wherein the regulator is configured, during said time window, to increment the counter in the case of the second regulation voltage being exceeded by the membrane voltage and decrement the counter in the case of the first regulation voltage being exceeded by the membrane voltage.

8. The neuromorphic circuit according to claim 7, **characterised in that** the regulator is configured to, at the expiration of said time window, generate an action potential of the first type (Spike_{POS}) and decrement the counter if the counter indicates a positive value and to generate an action potential of the second type (Spike_{NEG}) and increment the counter if the counter indicates a negative value.

9. The neuromorphic circuit according to one of claims 5 to 8, **characterised in that** the regulator is configured to generate an action potential of the first type (Spike_{POS}), respectively of the second type (Spike_{NEG}), on the output of the neuromorphic circuit in the case of, outside of said time window, the first action voltage, respectively the second action voltage, being exceeded by the membrane voltage.

10. The neuromorphic circuit according to one of claims 4 to 9, **characterised in that** it uses the same comparator at a high threshold (1) to constitute the first action comparator and the second regulation comparator and the same comparator at a low threshold (4) to constitute the second action comparator and the first regulation comparator.

11. A device implementing an artificial neural network, comprising a plurality of neuromorphic circuits according to one of claims 1 to 10.
